# EUROPEAN PATENT APPLICATION

(11) **EP 4 604 237 A1**
(43) Date of publication of application: **20.08.2025**
(21) Application number: 22962067.9
(22) Date of filing: 13.10.2022
(51) Int. Cl.: H01M 10/052, H01M 4/13, H01M 4/66, H01M 10/058, H01M 10/0583, H01M 10/0587, H01M 50/533, H01M 50/547

(54) **LITHIUM SECONDARY BATTERY AND METHOD FOR PRODUCING SAME**

(71) Applicant: TERAWATT TECHNOLOGY K.K., Yokohama-shi, Kanagawa 226-0026 (JP)
(72) Inventor: OYAMA, Gosuke, Yokohama-shi, Kanagawa 226-0026 (JP); MIYAKE, Minoru, Yokohama-shi, Kanagawa 226-0026 (JP); SATO, Yoshikuni, Yokohama-shi, Kanagawa 226-0026 (JP); FUJIKI, Satoshi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2022/038233
(87) International publication number: WO 2024/079848

(57) **Abstract**

There is provided a technique for improving an energy density and safety of a lithium secondary battery. The lithium secondary battery includes an electrode tab and a plurality of positive electrode laminates that are disposed to be spaced from each other in a lamination direction through an interposed negative electrode and separator. Each of the positive electrode laminates has a current collector that is constituted of an insulating layer sandwiched by conductive layers and that is electrically connected to the electrode tab, and a positive electrode provided on both surfaces of the current collector. At least one of the current collectors of the plurality of positive electrode laminates and at least one other current collector are joined to the electrode tab at positions different from each other in a case of being viewed from the lamination direction.

## Description

### Technical Field

An exemplary embodiment of the present disclosure relates to a lithium secondary battery and a method for manufacturing the same.

### Background Art

In recent years, the technology of converting natural energy such as solar light and wind power into electric energy has attracted attention. In association with such a situation, various secondary batteries have been developed as a power storage device which is highly safe and can store a lot of electric energy.

Among the above, a lithium secondary battery which carries out charging and discharging by transferring lithium ions between a positive electrode and a negative electrode is known to exhibit a high voltage and a high energy density. As a typical lithium secondary battery, a lithium ion secondary battery (LIB), which has an active material for allowing a positive electrode and a negative electrode to hold a lithium element, is known. In a lithium ion secondary battery, charging and discharging are carried out by the transfer of lithium ions between a positive-electrode active material and a negative-electrode active material.

In addition, for the intended purpose of realizing a high energy density, a lithium secondary battery (lithium metal battery; LMB) that a lithium metal is used as the negative-electrode active material, instead of a material into which the lithium ion can be inserted, such as a carbon material, has been developed. For example, Patent Literature 1 discloses a rechargeable battery using, as a negative electrode, an electrode based on lithium metal.

In addition, for the purpose of further improving high energy density and improving productivity, or the like, a lithium secondary battery using a negative electrode not having a negative-electrode active material such as the carbon material and the lithium metal has been developed. For example, Patent Literature 2 discloses a lithium secondary battery including a positive electrode and a negative electrode, and a separation membrane and an electrolyte interposed therebetween. In the negative electrode, metal particles are formed on a negative electrode current collector and transferred from the positive electrode, when the battery is charged, to form lithium metal on the negative electrode current collector in the negative electrode. Patent Literature 2 discloses that such a lithium secondary battery shows the possibility of providing a lithium secondary battery which has overcome the problem due to the reactivity of the lithium metal and the problem caused during the assembly process and therefore has improved performance and service life.

### Citation List

### Patent Literatures

Patent Literature 1: PCT Japanese Translation Patent Publication No. 2006-500755
Patent Literature 2: PCT Japanese Translation Patent Publication No. 2019-505971

### Summary of Invention

### Technical Problem

The present disclosure provides a technique for improving the energy density and safety of a lithium secondary battery.

### Solution to Problem

In one exemplary embodiment of the present disclosure, there is provided a lithium secondary battery including:
an electrode tab; and
a plurality of positive electrode laminates that are disposed to be spaced from each other in a lamination direction through an interposed negative electrode and separator, where each of the positive electrode laminates has a current collector that is constituted of an insulating layer sandwiched by conductive layers and that is electrically connected to the electrode tab, and a positive electrode provided on both surfaces of the current collector,
in which at least one of the current collectors of the plurality of positive electrode laminates and at least one other current collector are joined to the electrode tab at positions different from each other in a case of being viewed from the lamination direction.

### Advantageous Effect of Invention

According to one exemplary embodiment of the present disclosure, it is possible to provide a technique for improving the energy density and safety of a lithium secondary battery.

### Brief Description of Drawings

[Figure 1] Figure 1 is an exploded perspective view for an explanatory description of a configuration example of a lithium secondary battery according to an embodiment.
[Figure 2] Figure 2 is a view illustrating an example of a cross-sectional structure of a positive electrode laminate.
[Figure 3A] Figure 3A is a front view illustrating an example of a current collector.
[Figure 3B] Figure 3B is a front view illustrating an example of a current collector.
[Figure 4] Figure 4 is a view schematically illustrating a state of joining between a notch and an electrode tab.
[Figure 5] Figure 5 is a flowchart illustrating an example of a manufacturing method for a lithium secondary battery.
[Figure 6A] Figure 6A is a front view illustrating another example of the current collector.
[Figure 6B] Figure 6B is a front view illustrating another example of the current collector.
[Figure 6C] Figure 6C is a front view illustrating another example of the current collector.
[Figure 7A] Figure 7A is a front view illustrating another example of the current collector.
[Figure 7B] Figure 7B is a front view illustrating another example of the current collector.
[Figure 8A] Figure 8A is a view illustrating an example of a cross-sectional structure of a fibrous buffer functional layer.
[Figure 8B] Figure 8B is a view illustrating an example of a state of the buffer functional layer during charging.
[Figure 8C] Figure 8C is a view illustrating an example of a cross-sectional structure of a fiber.
[Figure 9] Figure 9 is a cross-sectional view of a main part for an explanatory description of another configuration example of the lithium secondary battery.
[Figure 10] Figure 10 is a cross-sectional view of a main part for an explanatory description of another configuration example of the lithium secondary battery.
[Figure 11] Figure 11 is a table illustrating the configurations of the current collectors and the results of various evaluations according to Examples and Comparative Examples.

### Description of Embodiments

Hereinafter, each embodiment of the present disclosure will be described.

In one exemplary embodiment of the present disclosure, there is provided a lithium secondary battery including:
an electrode tab; and
a plurality of positive electrode laminates that are disposed to be spaced from each other in a lamination direction through an interposed negative electrode and separator, where each of the positive electrode laminates has a current collector that is constituted of an insulating layer sandwiched by conductive layers and that is electrically connected to the electrode tab, and a positive electrode provided on both surfaces of the current collector,
in which at least one of the current collectors of the plurality of positive electrode laminates and at least one other current collector are joined to the electrode tab at positions different from each other in a case of being viewed from the lamination direction.

In one exemplary embodiment, in each of the plurality of positive electrode laminates, the current collector has a notch that extends in a direction parallel to a main surface of the current collector and that is joined to the electrode tab.

In one exemplary embodiment, the notch is positioned above or below the electrode tab in the lamination direction.

In one exemplary embodiment, an area of the notch is smaller than an area of the electrode tab.

In one exemplary embodiment, the notch of the at least one of the current collectors and the notch of the at least one other current collector are provided at positions different from each other in a case of being viewed from the lamination direction.

In one exemplary embodiment, in each of the plurality of positive electrode laminates, the notch of the current collector has an opening portion, and the opening portion of at least one of the current collectors and the opening portion of at least one other current collector are provided at positions different from each other in a case of being viewed from the lamination direction.

In one exemplary embodiment, a shape of at least one of the current collectors is different from a shape of at least one other current collector.

In one exemplary embodiment, 20 to 30 positive electrode laminates are provided.

In one exemplary embodiment, the current collectors of 4 to 15 positive electrode laminates are joined to the electrode tab at the same position in a case of being viewed from the lamination direction.

In one exemplary embodiment, the current collectors of the 4 to 15 positive electrode laminates and at least one other current collector are joined to the electrode tab at positions different from each other in a case of being viewed from the lamination direction.

In one exemplary embodiment, the lithium secondary battery has an energy density of 300 Wh/kg or more.

In one exemplary embodiment, the lithium secondary battery has a rated capacity of 1.5 A or more.

In one exemplary embodiment, the lithium secondary battery has a rated capacity of 5 A or more.

In one exemplary embodiment, a negative electrode laminate is constituted by alternately folding a sheet, which includes the negative electrode and the separator disposed on both surfaces of the negative electrode, at an acute angle a plurality of times, and each of the positive electrode laminates is disposed between the separators, which face each other in the negative electrode laminate.

In one exemplary embodiment, a negative electrode laminate is constituted by winding a sheet, which includes the negative electrode and the separator disposed on both surfaces of the negative electrode, so that the sheet is folded back a plurality of times, and each of the positive electrode laminates is disposed between the separators, which face each other in the negative electrode laminate.

In one exemplary embodiment, a buffer functional layer is provided between the negative electrode and the separator disposed on both surfaces of the negative electrode.

In one exemplary embodiment, the negative electrode is substantially free of a negative-electrode active material.

In one exemplary embodiment, the negative electrode is formed from at least one kind selected from the group consisting of a metal that does not react with Cu, Ni, Ti, Fe, and Li, an alloy of these metals, and stainless steel.

In one exemplary embodiment, there is provided a manufacturing method for a lithium secondary battery, including:
(a) a step of disposing a plurality of positive electrode laminates that are disposed to be spaced from each other in a lamination direction through an interposed negative electrode and separator, where each of the positive electrode laminates has a current collector that is constituted of an insulating layer sandwiched by conductive layers, and a positive electrode provided on both surfaces of the current collector; and
(b) a step of joining the current collector of each of the plurality of positive electrode laminates to an electrode tab,
in which in the step of (b), at least one of the current collectors of the plurality of positive electrode laminates and at least one other current collector are joined to the electrode tab at positions different from each other in a case of being viewed from the lamination direction.

In one exemplary embodiment, in the step of (b), the joining of the current collector to the electrode tab is carried out using any one of ultrasonic welding, laser welding, or resistance welding.

Hereinafter, each embodiment of the present disclosure will be described in detail with reference to the drawings. It is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

### <Configuration example of secondary battery>

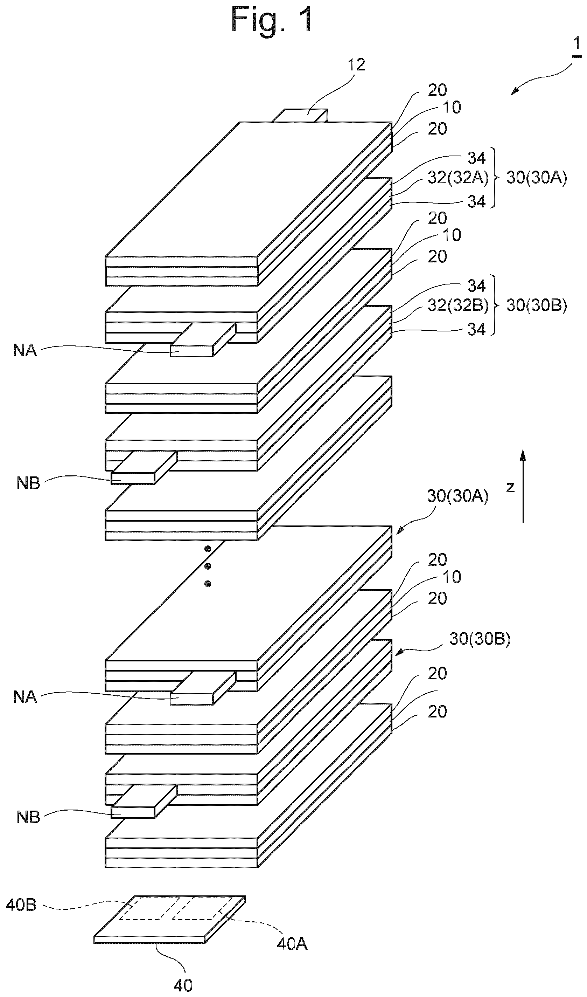

Figure 1 is an exploded perspective view for an explanatory description of a configuration example of a lithium secondary battery 1 (hereinafter, also referred to as a "secondary battery 1") according to an embodiment. As illustrated in Figure 1, the secondary battery 1 is constituted to include a plurality of positive electrode laminates 30 (30A and 30B) and an electrode tab 40 for a positive electrode, which is electrically joined to the positive electrode laminate 30. The respective positive electrode laminates 30 are disposed to be spaced apart from each other in a lamination direction (the z direction in Figure 1) through an interposed negative electrode 10 and separator 20 disposed on both surfaces of the negative electrode 10. Hereinafter, each configuration will be described in detail.

### (Negative electrode)

In an embodiment, the negative electrode 10 is formed from at least one kind of metal selected from the group consisting of a metal that does not react with Li, such as Cu, Ni, Ti, and Fe, an alloy thereof, and stainless steel (SUS). The "metal that does not react with Li" may be a metal that does not react with a lithium ion or a lithium metal to form an alloy in the operating state of the secondary battery 1.

The negative electrode 10 may function as a current collector. As illustrated in Figure 1, the negative electrode 10 may have a negative electrode terminal 12. The negative electrode terminal 12 may be a notch that extends, as a part of the negative electrode 10, from the surface and/or the side surface of the negative electrode 10 in a direction parallel to the main surface of the negative electrode 10. The negative electrode terminal 12 may be constituted as a member different from the negative electrode 10 or may be a conductive member electrically connected to the negative electrode 10. The negative electrode terminal 12 of each negative electrode 10 is electrically connected to an electrode tab (not illustrated in the drawing) for a negative electrode.

In an embodiment, the negative electrode 10 is substantially free of a negative-electrode active material. In an embodiment, the layer thickness of the negative-electrode active material that is deposited on the negative electrode 10 at the end of discharging (for example, a state where the open circuit voltage of the battery is 2.5 V or more and 3.6 V or less) is 25 µm or less. In an embodiment, the layer thickness of the negative-electrode active material at the end of discharging may be 20 µm or less, 15 µm or less, 10 µm or less, or 5 µm or less, and it may be 0 µm. Since the negative electrode 10 is substantially free of a negative-electrode active material, the energy density per volume can be improved in addition to the weight energy density. It is noted that in this case, the secondary battery 1 can also be referred to as an "anode-free lithium battery", a "zero-anode lithium battery", or an "anode-less lithium battery".

The negative-electrode active material is a substance that causes an electrode reaction, that is, an oxidation reaction and a reduction reaction in the negative electrode. The negative-electrode active material may be, for example, lithium metal, an alloy containing lithium metal, a carbon-based substance, a metal oxide, a metal that is alloyed with lithium, an alloy containing the metal, and the like. The carbon-based substance may be, for example, graphene, graphite, hard carbon, and a carbon nanotube. The metal oxide may be, for example, a titanium oxide-based compound or a cobalt oxide-based compound. The metal to be alloyed with the above-described lithium may be, for example, silicon, germanium, tin, lead, aluminum, or gallium.

In an embodiment, the negative electrode 10 does not have a negative-electrode active material before the initial charging of the battery (in a state from the assembly of the battery until the first charging is carried out). That is, in the secondary battery 1, charging and discharging may be carried out by, after the initial charging, depositing lithium metal on the negative electrode and electrolytically dissolving the deposited lithium metal. In this case, the volume and the mass occupied by the negative-electrode active material are suppressed, the volume and the mass of the entire battery are reduced, and, in principle, the energy density is increased. It is noted that the fact that "lithium metal is deposited on the negative electrode" includes not only that lithium metal is deposited on the surface of the negative electrode but also that lithium metal is deposited on the surface of the solid electrolyte interface (SEI) layer or the surface or inside of the buffer functional layer, which will be described later.

In an embodiment, in a case where the mass of lithium metal deposited on the negative electrode in a state where the voltage is 4.2 V is denoted as M_{4.2} and the same mass at a voltage of 3.0 V is denoted as M_{3.0}, M_{3.0}/M_{4.2} may be 40% or less or 35% or less. In an embodiment, the ratio M_{3.0}/M_{4.2} may be 1.0% or more, 2.0% or more, 3.0% or more, or 4.0% or more.

In an embodiment, the average thickness of the negative electrode 10 may be 1.0 µm or more and 30 µm or less. This makes it possible to reduce the volume occupied by the negative electrode 10 and improve the energy density. The average thickness of the negative electrode 10 may be 2.0 µm or more and 20 µm or less, 2.0 µm or more and 18 µm or less, or 3.0 µm or more and 15 µm or less.

In an embodiment, on at least a part of a surface facing the positive electrode laminate 30, the negative electrode 10 may be coated with a compound (hereinafter, also referred to as a "negative electrode coating agent") containing an aromatic ring in which two or more elements selected from the group consisting of N, S, and O are each independently bonded. The negative electrode coating agent can be retained on the negative electrode 10 by coordinate bonding of the above-described element to the metal atom constituting the negative electrode 10. According to this aspect, the non-uniform deposition reaction of the lithium metal can be suppressed on the surface of the negative electrode 10, and the growth of the lithium metal deposited on the negative electrode 10 in a dendritic shape can be suppressed.

In an embodiment, the negative electrode coating agent is applied onto at least a part of the surface of the negative electrode 10. In an embodiment, 10% or more of the surface in terms of area ratio may have the negative electrode coating agent, and 20% or more, 40% or more, 60% or more, or 80% or more of the surface may have the negative electrode coating agent.

In an embodiment, the aromatic ring contained in the negative electrode coating agent may be an aromatic hydrocarbon such as benzene, naphthalene, azulene, anthracene, or pyrene, or a heteroaromatic compound such as furan, thiophene, pyrrole, imidazole, pyrazole, pyridine, pyridazine, pyrimidine, or pyrazine. In an example, the aromatic ring is an aromatic hydrocarbon. In an example, the aromatic ring is benzene or naphthalene. In an example, the aromatic ring is benzene.

In an embodiment, the negative electrode coating agent may be constituted by bonding one or more nitrogen atoms to an aromatic ring. In an embodiment, the negative electrode coating agent may be a compound having a structure in which a nitrogen atom is bonded to an aromatic ring and one or more elements other than the nitrogen atom, which are selected from the group consisting of N, S, and O, are each independently bonded the nitrogen atom. In a case where a compound in which a nitrogen atom is bonded to an aromatic ring is used as the negative electrode coating agent, the cycle characteristics of the battery can be improved.

The negative electrode coating agent may be, for example, at least one selected from the group consisting of benzotriazole, benzimidazole, benzimidazolethiol, benzoxazole, benzothiazolethiol, benzothiazole, mercaptobenzothiazole, and derivatives thereof. In an example, the negative electrode coating agent is at least one selected from the group consisting of benzotriazole, benzimidazole, benzoxazole, mercaptobenzothiazole, and derivatives thereof.

### (Separator)

As illustrated in Figure 1, the separator 20 is disposed on both surfaces of the negative electrode 10. The separator 20 physically and/or electrically isolates the negative electrode 10 and the positive electrode laminate 30 from each other and also ensures the ion conductivity of lithium ions. In an embodiment, the separator 20 may be at least one kind selected from the group consisting of an insulating porous member, a polymer electrolyte, a gel electrolyte, and an inorganic solid electrolyte. As the separator 20, one kind of member may be used alone, or two or more kinds of members may be used in combination.

In a case where the separator 20 includes an insulating porous member, the pores of the porous member are filled with a substance having ion conductivity (an electrolyte solution, a polymer electrolyte, a gel electrolyte, and/or the like). As a result, the separator 20 exhibits ion conductivity. A material constituting the insulating porous member is not particularly limited, and examples thereof include an insulating polymer material and specifically include polyethylene (PE) and polypropylene (PP). That is, the separator 20 may be a porous polyethylene (PE) film, a porous polypropylene (PP) film, or a laminated structure thereof.

In an embodiment, one surface or both surfaces of the separator 20 may be coated with a separator coating layer. As a result, the cycle characteristics of the secondary battery 1 can be improved. In an embodiment, the separator coating layer may be a film that is continuous with a uniform thickness in an area of 50% or more of the surface of the separator 20. In an embodiment, the separator coating layer may contain a binder such as polyvinylidene fluoride (PVDF), a mixed material of styrene butadiene rubber and carboxymethyl cellulose (SBR-CMC), or polyacrylic acid (PAA). In an embodiment, the separator coating layer may be constituted by adding inorganic particles such as silica, alumina, titania, zirconia, or magnesium hydroxide to the above-described binder.

In an embodiment, the average thickness of the separator 20 (including a coating layer in a case where the separator 20 includes the coating layer) may be 3.0 µm or more and 40 µm or less. As a result, the volume occupied by the separator 20 can be reduced while the negative electrode 10 and the positive electrode laminate 30 are isolated from each other. In an embodiment, the average thickness of the separator 20 may be 5.0 µm or more and 30 µm or less, 7.0 µm or more and 10 µm or less, or 10 µm or more and 20 µm or less.

### (Positive electrode laminate)

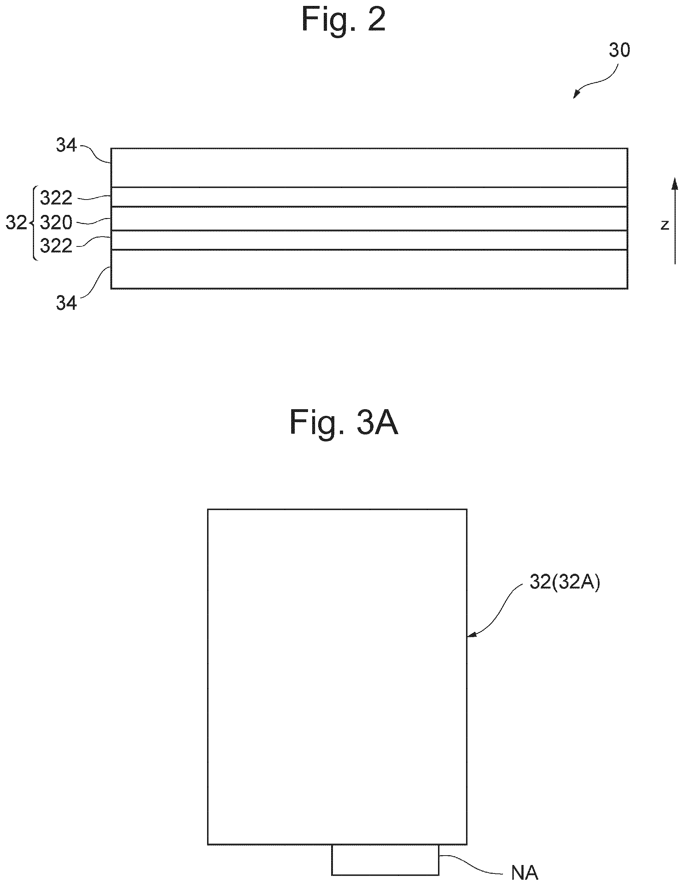

Figure 2 is a view illustrating an example of a cross-sectional structure of a positive electrode laminate 30. As illustrated in Figure 2, the positive electrode laminate 30 has a current collector 32 and a positive electrode 34 that is disposed on each of both surfaces of the current collector 32.

The current collector 32 has an insulating layer 320 and a conductive layer 322 that is formed to sandwich the insulating layer 320.

The insulating layer 320 may be composed of, for example, a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. The insulating layer 320 may be constituted by laminating at least one or more of the resins a plurality of times. In an embodiment, the insulating layer 320 is formed from a material having a melting point of 150°C or higher and 300°C or lower. In an embodiment, the average thickness of the insulating layer 320 may be 3 µm or more and 10 µm or less, and preferably 4 µm or more and 8 µm or less.

The insulating layer 320 can function to melt, for example, in a case where abnormal heat generation occurs in an overcharged state or a high temperature state, to damage the positive electrode laminate 30, and to block a short-circuit current inside the battery. As a result, a rapid temperature rise inside the secondary battery 1 can be suppressed, and the ignition of the battery can be suppressed. That is, the insulating layer 320 can contribute to the improvement of the safety of the secondary battery 1.

The conductive layer 322 is formed on both surfaces of the insulating layer 320 so that the insulating layer 320 is sandwiched. The conductive layer 322 is in physical and/or electrical contact with the positive electrode 34 and functions to transfer electrons to and from the positive electrode 34. The conductive layer 322 is composed of a conductor that does not react with lithium ions in the battery. In an embodiment, the conductive layer 322 is composed of at least one kind of material selected from the group consisting of aluminum, titanium, stainless steel, nickel, and alloys thereof. In an example, the conductive layer 322 is aluminum or an aluminum alloy. In an embodiment, the conductive layer 322 is formed by subjecting the above-described material to vapor deposition, sputtering, electrolytic plating, or bonding on the surfaces of both sides of the insulating layer 320. In an embodiment, the average thickness of one surface of each conductive layer 322 may be 0.5 µm or more and 5 µm or less, preferably 0.7 µm or more and 3 µm or less, and more preferably 0.8 µm or more and 2.0 µm or less.

As illustrated in Figure 2, the positive electrode 34 is formed on both surfaces of the current collector 32. A material of the positive electrode 34 may be appropriately selected from publicly known materials depending on the use application. The average thickness of the positive electrode 34 may be appropriately adjusted according to the desired capacity and rate characteristics of the battery. In an embodiment, the average thickness of each of the positive electrodes 34 is, for example, 20 µm or more and 150 µm or less.

In an embodiment, the positive electrode 34 has a positive-electrode active material. The positive-electrode active material is a substance for holding a carrier metal in the positive electrode 34 and thus can also be referred to as a host material of the carrier metal. The positive-electrode active material is a material for holding lithium ions in the positive electrode 34, and in this case, by charging and discharging of the battery, the positive-electrode active material is filled with lithium ions and lithium ions are desorbed from the positive-electrode active material by charging and discharging of the battery. As a result, the stability and the output voltage of the battery can be improved.

In an embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In an embodiment, the positive-electrode active material may be at least one selected from the group consisting of LiCoO₂, LiNiₓCo_{y}Mn_{z}O (x + y + z = 1), LiNiₓCo_{y}Al_{z}O (x + y + z = 1), LiNiₓMn_{y}O (x + y = 1), LiNiO₂, LiMn₂O₄, LiFePO, LiCoPO, LiFeOF, LiNiOF, and LiTiS₂. The positive-electrode active material may be used alone or in a combination of two or more kinds thereof. In an embodiment, the content of the positive-electrode active material in the positive electrode 34 may be 50% by mass or more and 100% by mass or less with respect to the entire positive electrode 34.

In an embodiment, the positive electrode 34 may contain one or more components other than the positive-electrode active material.

In an embodiment, the positive electrode 34 may contain a positive electrode sacrificial material. The positive electrode sacrificial material is a lithium-containing compound which causes an oxidation reaction and substantially does not cause a reduction reaction in a charge/discharge potential range of the positive-electrode active material.

In an embodiment, the positive electrode 34 may contain a gel electrolyte. The gel electrolyte can improve the adhesive force between the positive electrode 34 and the current collector 32. In an example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In an embodiment, the positive electrode 34 may contain a conductive auxiliary agent and/or a binder. In an example, the conductive auxiliary agent is carbon black, a single-walled carbon nanotube (SWCNT), a multi-walled carbon nanotube (MWCNT), a carbon nanofiber (CF), or the like. In an example, the binder is polyvinylidene fluoride, polytetrafluoroethylene, styrene butadiene rubber, an acrylic resin, a polyimide resin, or the like. In an embodiment, the content of the conductive auxiliary agent is 0.5% by mass to 30% by mass with respect to the entire positive electrode 34. In an embodiment, the content of the binder may be 0.5% by mass to 30% by mass with respect to the entire positive electrode 34.

In an embodiment, the positive electrode 34 may contain a polymer electrolyte. In an example, the polymer electrolyte is a solid polymer electrolyte that mainly contains a polymer and an electrolyte, and a semi-solid polymer electrolyte that mainly contains a polymer, an electrolyte, and a plasticizer. In an embodiment, the content of the polymer electrolyte may be 0.5% by mass and 30% by mass or less with respect to the entire positive electrode 34.

The current collector 32 of at least one positive electrode laminate 30 among the plurality of positive electrode laminates 30 has a shape different from the shape of the current collector 32 of at least one other positive electrode laminate 30. For example, as illustrated in Figure 1, the plurality of positive electrode laminates 30 may be composed of a first positive electrode laminate 30A and a second positive electrode laminate 30B. The first positive electrode laminate 30A and the second positive electrode laminate 30B have a shape different from the shapes of the current collectors 32 (32A and 32B).

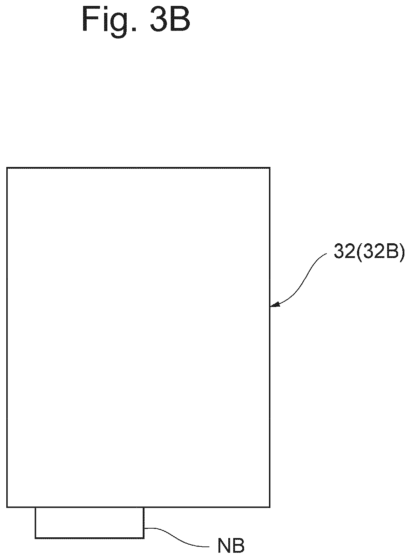

Figure 3A is a front view illustrating an example of a current collector 32A of the first positive electrode laminate 30A. Figure 3B is a front view illustrating an example of a current collector 32B of the second positive electrode laminate 30B. As illustrated in Figure 3A, the current collector 32A has a notch NA that extends in a direction parallel to the main surface of the current collector 32A. The notch NA is disposed on one side (the right side of the paper surface in Figure 3A) of the current collector 32A in the width direction. As illustrated in Figure 3B, the current collector 32B has a notch NB that extends in a direction parallel to the main surface. The notch NB is disposed on the other side (the left side of the paper surface in Figure 3B) of the current collector 32B in the width direction. That is, the current collector 32A and the current collector 32B have different shapes (shapes in a case of being viewed from the lamination direction) in front view since the notches (NA and NB) have different extending positions. It is noted that the shapes of the notch NA and the notch NB themselves may be the same or may be different from each other.

The disposition (the order in which the first positive electrode laminate 30A and the second positive electrode laminate 30B are disposed through an interposed negative electrode 10 and separator 20 in the lamination direction) of the first positive electrode laminate 30A and the second positive electrode laminate 30B may be appropriately selected. For example, as illustrated in Figure 1, one first positive electrode laminate 30A and one second positive electrode laminate 30B may be alternately disposed. In addition, for example, one first positive electrode laminate 30A or a set of a plurality of the first positive electrode laminates 30A, and one second positive electrode laminate 30B or a set of a plurality of the second positive electrode laminates 30B may be alternately disposed once or a plurality of times.

In an embodiment, the number of the first positive electrode laminate 30A and the number of the second positive electrode laminate 30B may be substantially the same (about 1/2 of the total number of the positive electrode laminates 30). In an embodiment, the numbers of the first positive electrode laminate 30A and the second positive electrode laminate 30B may be different from each other. In an embodiment, the difference between the number of the first positive electrode laminate 30A and the number of the second positive electrode laminate 30B may be 10 or less, 5 or less, or 2 or less.

As illustrated in Figure 1, the electrode tab 40 for a positive electrode is disposed on one side (the lower side in Figure 1) of the secondary battery 1 in the lamination direction (the z direction in Figure 1). The electrode tab 40 may be composed of the same material as the material of the conductive layer 322 of the current collector 32, and in an example, the material is aluminum or an aluminum alloy. The electrode tab 40 may have a first joining region 40A and a second joining region 40B on the surface. As illustrated in Figure 1, the first joining region 40A and the second joining region 40B may be completely separated regions without overlapping portions. In addition, the first joining region 40A and the second joining region 40B may have an overlapping portion. The area of the surface of the electrode tab 40 may be larger than the area of each of the first notch NA and the second notch NB.

The first current collector 32A of the first positive electrode laminate 30A and the current collector 32B of the second positive electrode laminate 30B are joined to the electrode tab 40 at positions different from each other in a case of being viewed from the lamination direction (the z direction in Figure 1). More specifically, the first notch NA of the first current collector 32A is joined to the electrode tab 40 on the first joining region 40A on the surface of the electrode tab 40. The second notch NB of the second current collector 32B is joined to the electrode tab 40 on the second joining region 40B on the surface of the electrode tab 40. In an embodiment, the first notch NA and the second notch NB may be joined to the electrode tab 40 without overlapping each other in a case of being viewed from the lamination direction. In an embodiment, the first notch NA and the second notch NB may be joined to the electrode tab 40 such that portions thereof overlap in a case of being viewed from the lamination direction.

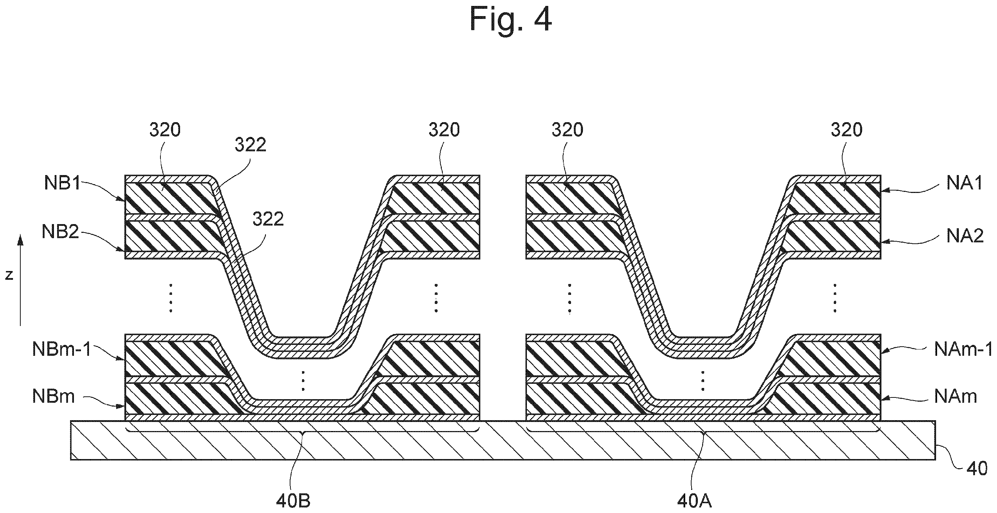

Figure 4 is a view schematically illustrating an example of a state of joining between a notch and an electrode tab. As illustrated in Figure 4, the first notches NA (NA1 to NAn) are respectively disposed to face each other on the first joining region 40A of the electrode tab 40 and are joined to the electrode tab 40. The second notches NB (NB1 to NBm) are respectively disposed to face each other on the second joining region 40B of the electrode tab 40 and are joined to the electrode tab 40. The first notch NA and the second notch NB are joined to the electrode tab 40 at positions different from each other in a case of being viewed from the lamination direction (the z direction in Figure 4).

As illustrated in Figure 4, each of the notches (NA and NB) is pressed in the lamination direction (the z direction in Figure 4) in a case of being joined to the electrode tab 40, whereby the insulating layer 320 is pushed to the outer side in the width direction, and the conductive layers 322 and 322 sandwiching the insulating layer 320 are electrically connected to each other. As a result, all the positive electrodes 34 included in the plurality of positive electrode laminates 30 (30A and 30B) are in a state of being electrically connected to the electrode tab 40 (through the conductive layer 322 of the current collector 32 to which each positive electrode 34 is connected). In an embodiment, the joining between the notch and the electrode tab 40 may be carried out by ultrasonic welding, laser welding, resistance welding, or spot welding. It is noted that the joining position between the notches or the joining position between the notch and the electrode tab 40 may be present as one or a plurality of points (spots) as long as they are electrically connected. In addition, the joining position may be present as a continuous surface.

As described above, the insulating layer 320 can suppress a rapid temperature rise inside the secondary battery 1 and can suppress the ignition of the battery, for example, in a case where abnormal heat generation occurs in an overcharged state or a high temperature state. In a current collector having a configuration in which such an insulating layer is sandwiched between conductive layers, as the number of current collectors increases, the joining to the electrode tab is likely to be difficult, and thus the resistance in a case where the joining is carried out tends to increase. In this regard, in the secondary battery 1 according to the present embodiment, as described above, the first notch NA and the second notch NB are joined to the electrode tab 40 at positions different from each other in a case of being viewed from the lamination direction (the z direction in Figure 4). That is, the joining positions between the notches (NA and NB) and the electrode tab 40 are dispersed at two positions in a case of being viewed in the lamination direction. Therefore, even in a case where the total number (the number of laminations) of the positive electrode laminates 30 in the secondary battery 1 increases, the number of notches joined to the electrode tab 40 at the same position in a case of being viewed from the lamination direction is suppressed (for example, in a case where the number of the first notches NA and the number of the second notches NB are the same, the number of notches joined at the same position in a case of being viewed from the lamination direction is half the total number of the positive electrode laminates 30).

By suppressing the number of notches joined at the same position in a case of being viewed from the lamination direction, the insulating layer 320 of each notch is pushed to the outer side in the width direction in a case of joining the notches (NA and NB) to the electrode tab 40, and thus it is easy to ensure conduction between the conductive layers 322 and 322. As a result, it is possible to suppress an increase in the resistance of the electrode tab 40 and the resultant excessive heat generation. In addition, by suppressing the number of notches joined at the same position in a case of being viewed from the lamination direction, it is possible to suppress the pressing force required for joining the notches (NA and NB) to the electrode tab 40. As a result, it is possible to suppress the damage, fracture, or the like of the notches (NA and NB) due to excessive pressing during joining.

According to the above description, it is possible to increase the total number (the number of laminations) of the positive electrode laminates 30 included in the secondary battery 1 while suppressing an increase in the electrical resistance of the current collector 32 and the electrode tab 40. As a result, the energy density, the capacity, and the cycle characteristics of the secondary battery 1 can be improved.

In an embodiment, the total number of positive electrode laminates 30 included in the secondary battery 1 may be 5 or more, 10 or more, or 20 or more. In an embodiment, the total number of positive electrode laminates included in the secondary battery 1 may be 50 or less, 40 or less, or 30 or less. In an embodiment, the energy density of the secondary battery 1 may be 300 Wh/kg or more. The rated capacity of the lithium secondary battery may be 1.5 Ah or more or 5 Ah or more.

### (Electrolyte solution)

In an embodiment, the secondary battery 1 may contain an electrolyte solution. The electrolyte solution is a liquid containing a solvent and an electrolyte, and has ion conductivity.

The electrolyte solution may be rephrased as a liquid electrolyte and act as a conductive path for lithium ions. Therefore, in a case where the secondary battery 1 has an electrolyte solution, the internal resistance is reduced, and the energy density, the capacity, and the cycle characteristics can be improved.

The electrolyte solution may be, for example, a solution that fills the housing (pouch) of the secondary battery 1. In addition, for example, the electrolyte solution may be infiltrated into the separator 20, and in addition, it may be retained by the polymer to constitute a polymer electrolyte or a gel electrolyte.

The electrolyte contained in the electrolyte solution may be, for example, a lithium salt. The lithium salt may be, for example, one selected from the group consisting of Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄, or a combination of two or more thereof.

The solvent contained in the electrolyte solution may be a non-aqueous solvent having a fluorine atom (hereinafter, referred to as a "fluorinated solvent") and a non-aqueous solvent having no fluorine atom (hereinafter, referred to as a "non-fluorine solvent").

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, or 1H,1H,5H-octafluoropentyl-1,1,2,2-tetrafluoroethyl ether.

The non-fluorine solvent may be triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

One or two or more of the fluorinated solvents and/or the non-fluorine solvents may be freely used either singly or in combination at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### <Manufacturing method for secondary battery>

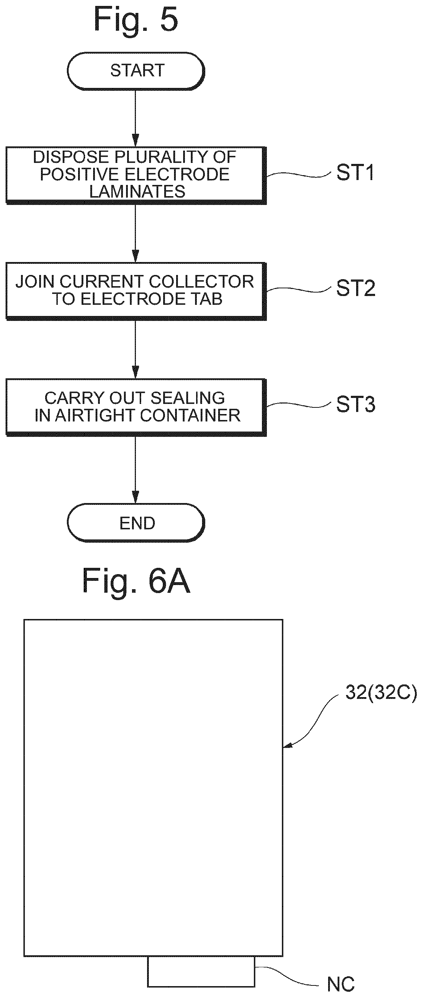

Figure 5 is a flowchart illustrating an example of a manufacturing method for the secondary battery 1. This method includes a step ST1 of disposing a plurality of positive electrode laminates, a step ST2 of joining a current collector to an electrode tab, and a step ST3 of carrying out sealing in an airtight container.

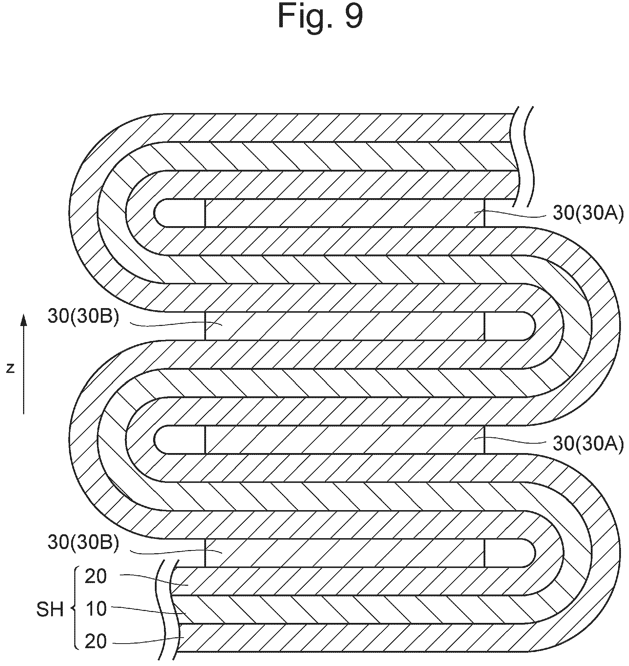

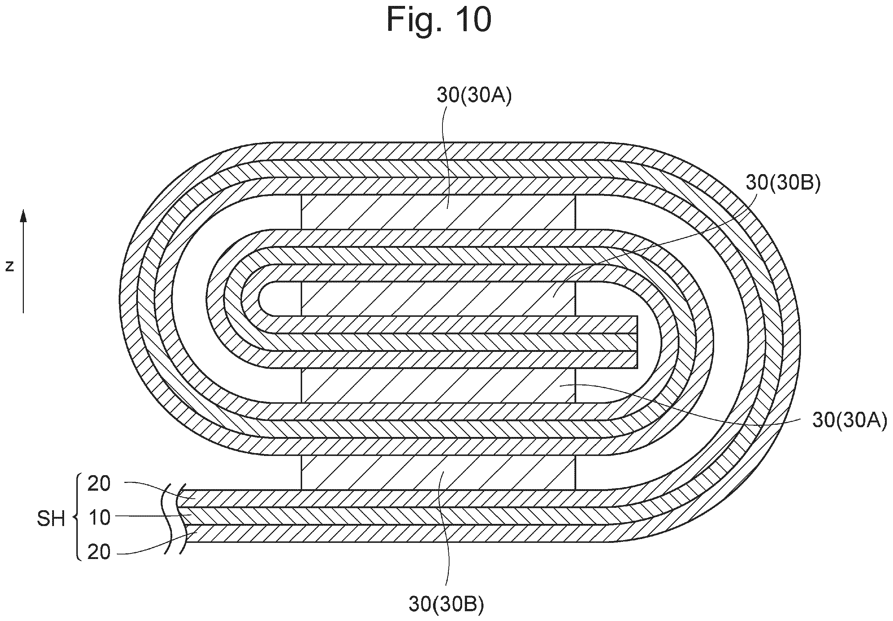

In the step ST1, a plurality of positive electrode laminates is disposed. First, a predetermined number (for example, 4 to 15) of the first positive electrode laminates 30A and a predetermined number (for example, 4 to 15) of the second positive electrode laminates 30B are prepared. Next, the first positive electrode laminate 30A and the second positive electrode laminate 30B are disposed in a predetermined order in the lamination direction through the interposed negative electrode 10 and separator 20. For example, as illustrated in Figure 1, one first positive electrode laminate 30A and one second positive electrode laminate 30B may be alternately disposed through the interposed negative electrode 10 and separator 20. It is noted that in a case where the negative electrode 10 and the separator 20 are constituted in a sheet shape as described later, the first positive electrode laminate 30A and the second positive electrode laminate 30B may be disposed in a predetermined order between the separators 20 formed by folding the sheet in a zigzag shape (zigzag form) (see Figure 9) or between the separators 20 formed by winding the sheet (see Figure 10).

Next, in the step ST2, the current collector 32 of the positive electrode laminate 30 is joined to the electrode tab 40 for a positive electrode. Specifically, the first notch NA of the first current collector 32A is joined onto the first joining region 40A of the electrode tab 40 such that the first notch NA and the electrode tab 40 face each other. In addition, the first notch NB of the second current collector 32B is joined onto the first joining region 40B of the electrode tab 40 such that the first notch NB and the electrode tab 40 face each other. As a result, the first notch NA and the second notch NB are joined to the electrode tab 40 at positions different from each other in a case of being viewed from the lamination direction. In addition, the negative electrode terminal 12 of the negative electrode 10 is joined to an electrode tab for a negative electrode. The joining between the current collector and the electrode tab may be carried out by ultrasonic welding, laser welding, resistance welding, or spot welding.

Next, in the step ST3, the sealing in an airtight container is carried out. That is, the molded body obtained in the step ST2 is sealed in an airtight container such as a laminated film. In this case, an electrolyte solution may be sealed in the airtight container. As described above, the secondary battery 1 is manufactured.

### <Method of using secondary battery>

The secondary battery 1 is charged and discharged by connecting the electrode tab 40 for a positive electrode to one end of the external circuit and connecting an electrode tab for a negative electrode to the other end of the external circuit. The external circuit may be, for example, a resistor, a power source, an apparatus, a device, another battery, or a potentiostat. Each of the notches (NA and NB) of the plurality of positive electrode laminates 30 may be connected to the external circuit at the same potential. In addition, each of the negative electrode terminals 12 of the plurality of negative electrodes 10 may be connected to the external circuit at the same potential.

In a case where a voltage is applied between the electrode tab 40 for a positive electrode and the electrode tab for a negative electrode such that a current flows from the electrode tab for a negative electrode to the electrode tab 40 for a positive electrode through an external circuit, the secondary battery 1 is charged, and lithium metal is deposited on the surface of the negative electrode 10. In a case where the electrode tab 40 for a positive electrode and the electrode tab for a negative electrode in the secondary battery 1 after charging are connected through a desired external circuit, the secondary battery 1 is discharged, and the lithium metal deposited on the surface of the negative electrode 10 is electrolytically dissolved.

In an embodiment, in the secondary battery 1, a solid electrolyte interfacial layer (SEI layer) may be formed on the surface of the negative electrode 10 or the surface of the separator 20 (that is, at the interface between the negative electrode 10 and the separator 20) by the first charging (initial charging) after the assembly of the battery. The SEI layer may contain, for example, an inorganic compound containing lithium or an organic compound containing lithium. In an embodiment, the average thickness of the SEI layer is preferably 1.0 nm or more and 10 µm or less. In a case where the SEI layer is formed in the secondary battery 1, lithium metal is deposited or dissolved at the negative electrode 10 and/or an interface between the separator 20 and the SEI layer due to charging and discharging.

### <Modification example>

The secondary battery 1 can be variously modified without departing from the scope and gist of the present disclosure.

### (Shape of current collector)

In an embodiment, the number of kinds of shapes of the current collectors 32 included in the secondary battery 1 may be three or more, and each of the current collectors 32 may be allowed to be joined to the electrode tabs 40 at three or more different positions in a case of being viewed from the lamination direction. The number of kinds of shapes of the current collectors 32 included in the secondary battery 1 may be, for example, three, four, or five. In an embodiment, the number of kinds of shapes of the current collectors 32 included in the secondary battery 1 may be set such that the number of current collectors 32 joined to the electrode tab 40 at the same position in a case of being viewed from the lamination direction is 15 or less, 10 or less, 5 or less, or 3 or less.

Each of Figure 6A to Figure 6C is a front view illustrating another example of the current collector 32. In an embodiment, as the current collector 32, one or more of each of current collectors 32C, 32D, and 32E illustrated in Figure 6A to Figure 6C may be used.

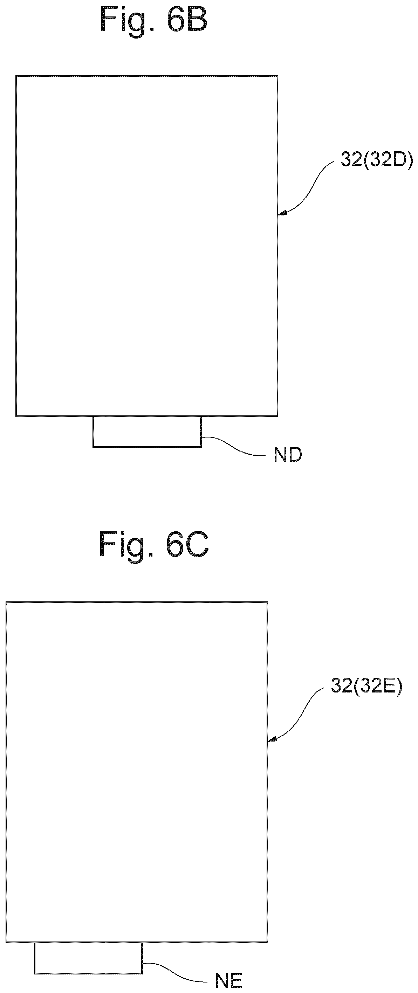

As illustrated in Figure 6A, the notch NC of the current collector 32C is disposed on one side (the right side of the paper surface in Figure 6A) of the current collector 32C in the width direction. As illustrated in Figure 6B, the notch ND of the current collector 32D is disposed at the center (center of the paper surface in Figure 6B) of the current collector 32D in the width direction. As illustrated in Figure 6C, the notch NE of the current collector 32E is disposed on the other side (the left side of the paper surface in Figure 6C) of the current collector 32E in the width direction. That is, the current collector 32C to the current collector 32E have different shapes (shapes in a case of being viewed from the lamination direction) in front view since the notches (NC to NE) have different extending positions.

In an embodiment, the current collectors 32 of the plurality of positive electrode laminates 30 may be any of the current collectors 32C to 32E (hereinafter, the respective positive electrode laminates 30 are referred to as a "laminate 30C", a "laminate 30D", and a "laminate 30E"). In this case, each of the current collectors 32D to 32E of the laminates 30C to 30E is joined to the electrode tab 40 at three positions different from each other in a case of being viewed from the lamination direction. This makes it possible to disperse the joining positions between the notches (NC to NE) and the electrode tab 40 at different positions (three positions) in a case of being viewed from the lamination direction.

The disposition of the laminates 30C to 30E (the order in which the laminates are disposed through the interposed negative electrode 10 and separator 20 in the lamination direction) may be appropriately selected. For example, one laminate 30C, one laminate 30D, and one laminate 30E may be disposed in this order. In addition, for example, one laminate C or a set of a plurality of laminates C, one laminate D or a set of a plurality of laminates D, and one laminate E or a set of a plurality of laminates E may be disposed in this order once or a plurality of times.

In an embodiment, the number of the laminates 30C to 30E may be substantially the same, that is, about 1/3 of the total number of the positive electrode laminates 30. In an embodiment, the number of laminates 30C to 30E may be different. In an embodiment, the difference in number between the laminates 30C to 30E may be 10 or less, 5 or less, or 2 or less.

### (Shape of notch)

In an embodiment, the shape of the notch in front view (the shape in a case of being viewed from the lamination direction) may be allowed to be different in addition to or instead of making the extending position of the notch different.

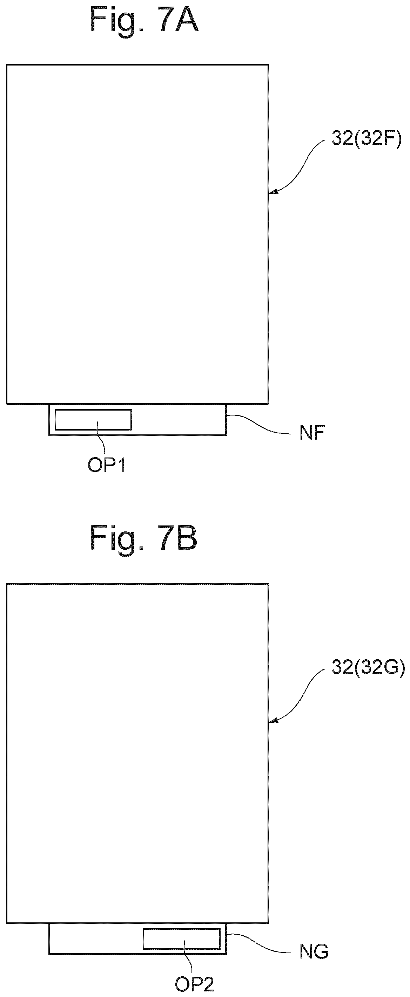

Each of Figure 7A and Figure 7B is a front view illustrating another example of the current collector 32. In an embodiment, as the current collector 32, one or more of each of the current collectors 32F and 32G illustrated in Figure 7A and Figure 7B may be used.

As illustrated in Figure 7A, in the notch NF of the current collector 32F, an opening OP1 is provided on one side (the left side of the paper surface in Figure 7A) in the width direction. As illustrated in Figure 7B, in the notch NG of the current collector 32G, an opening OP2 is provided on the other side (the right side of the paper surface in Figure 7B) in the width direction. That is, the notches NF and NG of the current collectors 32F and 32G have different positions of the openings (OP1 and OP2), and thus have different shapes (shapes in a case of being viewed from the lamination direction) in front view.

In an embodiment, the current collectors 32 of the plurality of positive electrode laminates 30 may be any of the current collectors 32F and 32G (hereinafter, the respective positive electrode laminates 30 are referred to as a "laminate 30F" and a "laminate 30G"). Since the opening positions of the notches (NF and NG) of the current collectors 32F and 32G are different from each other, the current collectors 32F and 32G are joined to the electrode tabs 40 at positions different from each other in a case of being viewed from the lamination direction. This makes it possible to disperse the joining positions between the notches (NF and NG) and the electrode tab 40 at different positions (two positions) in a case of being viewed from the lamination direction.

The disposition of the laminates 30F and 30G (the order in which the laminates are disposed through the interposed negative electrode 10 and separator 20 in the lamination direction) may be appropriately selected. For example, one laminate 30F and one laminate 30G may be alternately disposed. In addition, for example, one laminate F or a set of a plurality of laminates F, and one laminate G or a set of a plurality of laminates G may be alternately disposed once or a plurality of times.

In an embodiment, the number of the laminates 30F and the number of the laminates 30G may be substantially the same, that is, about half of the total number of the positive electrode laminates 30. In an embodiment, the number of the laminates 30F and the number of the laminates 30G may be different from each other. In an embodiment, the difference in number between the laminates 30F and 30G may be 10 or less, 5 or less, or 2 or less.

### (Buffer functional layer)

In an embodiment, a porous or fibrous buffer functional layer 50 may be provided between the negative electrode 10 and the separator 20. The buffer functional layer has a solid portion (including a gel-like portion) having ion conductivity and electronic conductivity, and a pore portion composed of a gap of the solid portion. In this case, the lithium metal can be deposited on the surface (at the interface between the negative electrode 10 and the buffer functional layer) of the negative electrode 10 and/or inside the buffer functional layer (the surface of the solid portion of the buffer functional layer).

The buffer functional layer may be, for example, a nonwoven fabric or a woven fabric, which consists of fibers. The material constituting the buffer functional layer may be any of an inorganic material, an organic material, or a metal material, or a combination thereof. A material which has been subjected to a plating treatment for imparting conductivity to a skeleton having no electron conductivity may be used.

In a case where the secondary battery 1 having a buffer functional layer is charged, electrons from the negative electrode 10 and lithium ions from the separator 20 and/or the electrolyte solution are supplied to the solid portion of the buffer functional layer. As a result, electrons and lithium ions react on the surface of the solid portion of the buffer functional layer, and lithium metal is deposited in the pore portion (on the surface of the solid portion). As a result, the buffer functional layer can suppress the volume expansion of the battery due to the deposition of the lithium metal during charging. In addition, the buffer functional layer contributes to the increase in the surface area of the place where lithium metal is deposited. As a result, the reaction rate at which lithium metal is deposited is gently controlled, the formation of dendrites is suppressed, and as a result, the cycle characteristics of the secondary battery can be improved.

In an embodiment, the porosity of the buffer functional layer may be, for example, 50% or more, 60% or more, or 70% or more in terms of % by volume. The porosity of the buffer functional layer may be, for example, 97% or less, 95% or less, or 90% or less in terms of % by volume.

In an embodiment, the average thickness of the buffer functional layer may be, for example, 100 µm, 50 µm or less, or 30 µm or less. The average thickness of the buffer functional layer may be, for example, 1 µm, 4 µm or more, or 7 µm or more.

In an embodiment, in a case where the buffer functional layer contains a metal capable of reacting with lithium, the total capacity of the negative electrode 10 and the buffer functional layer may be sufficiently small with respect to the capacity of the positive electrode 34, and it may be, for example, 20% or less, 15% or less, 10% or less, or 5% or less.

In an embodiment, the weight per surface of the buffer functional layer may be 3 g/m² or more and 20 g/m² or less, 4 g/m² or more and 15 g/m², or 5 g/m² or more and 10 g/m² or less.

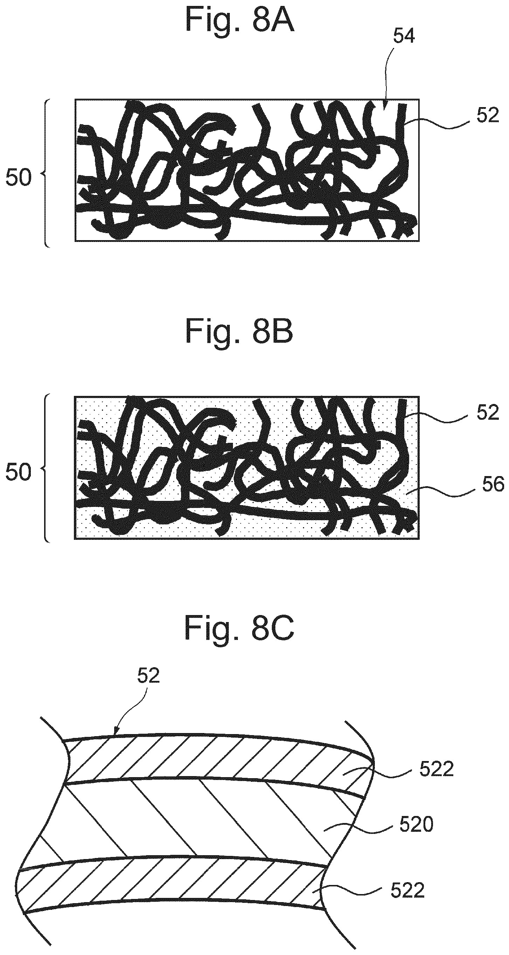

Figure 8A is a view illustrating an example of a cross-sectional structure of the fibrous buffer functional layer 50. Figure 8B is a view illustrating an example of a state of the buffer functional layer 50 during charging. Figure 8C is a view illustrating an example of a cross-sectional structure of a fiber 52.

As illustrated in Figure 8A, the buffer functional layer 50 has the fiber 52 (solid portion) and a pore portion 54 composed of a gap surrounding the fiber 52. The fiber 52 has ion conductivity and electronic conductivity.

As illustrated in Figure 8B, in a case where the secondary battery 1 having the buffer functional layer 50 is charged, lithium metal 56 is deposited such that the pore portion 54 is filled on the surface of the fiber 52 (solid portion) of the buffer functional layer.

As illustrated in Figure 8C, the fiber 52 may be composed of a fibrous ion conductive layer 520 and an electrical conductive layer 522 that covers the surface of the ion conductive layer 520.

The average diameter of the ion conductive layer 520 may be 30 nm or more and 5,000 nm or less, 50 nm or more and 2,000 nm or less, 70 nm or more and 1,000 nm or less, or 80 nm or more and 500 nm or less. The average thickness of the electrical conductive layer 522 may be 1 nm or more and 300 nm or less, 5 nm or more and 200 nm or less, or 10 nm or more and 150 nm or less.

### (Negative electrode laminate)

In an embodiment, the negative electrode 10 and the separator 20 disposed on both surfaces of the negative electrode 10 may be configured to have a sheet shape.

Each of Figure 9 and Figure 10 is a cross-sectional view of a main part for an explanatory description of another configuration example of the lithium secondary battery. As illustrated in Figure 9 and Figure 10, the negative electrode 10 and the separator 20 disposed on both surfaces of the negative electrode 10 may be constituted as one sheet SH.

In the example illustrated in Figure 9, the sheet SH is alternately folded at an acute angle a plurality of times to constitute a negative electrode laminate, and a plurality of positive electrode laminates 30 (30A and 30B) are disposed between the separators facing each other in the negative electrode laminate.

In the example illustrated in Figure 10, the sheet SH is wound to be folded back a plurality of times to constitute a negative electrode laminate, and a plurality of positive electrode laminates 30 (30A and 30B) are disposed between the separators facing each other in the negative electrode laminate.

In the examples illustrated in Figure 9 and Figure 10, even in a case where the negative electrode 10 or the separator 20 is extremely thin, it can be integrally treated as the sheet SH, and thus the productivity of the battery can be improved. In addition, in the sheet SH, since the negative electrode 10 sandwiched between the separators 20 is subjected to a physical pressure from both surfaces, wrinkling is unlikely to occur in the negative electrode 10 in a case where the sheets SH are laminated, which makes it possible to improve the cycle characteristics of the battery.

### <Examples>

Hereinafter, the present disclosure will be described using Examples and Comparative Examples. The present disclosure is not limited by the following examples and comparative examples.

### (Example 1)

A lithium secondary battery having the structure illustrated in Figure 9 was created as Example 1. As the negative electrode 10, a sheet-shaped Cu substrate having a thickness of 8 µm was prepared. A Ni terminal was joined to the negative electrode 10 as the negative electrode terminal 12 by ultrasonic welding. As the separator 20, a sheet (thickness: 15 µm) having a surface coated with a mixture of polyvinylidene fluoride (PVDF) and Al₂O₃ was prepared. Both surfaces of the negative electrode 10 were sandwiched with the separators 20 and pressed to obtain the sheet SH.

As the current collector 32 of the positive electrode laminate 30, a film-shaped polyethylene terephthalate (PET, insulating layer 320) having a thickness of 6 µm was subjected to vapor deposition with Al (conductive layer 322) to 1.5 µm on both surfaces, and then punched into two kinds of shapes by punching out. As a result, the current collector 32A and the current collector 32B, which have a size of 5 cm × 10 cm and have such notches NA and NB as illustrated in Figure 3A and Figure 3B, were obtained. As the positive electrode 34, a mixture obtained by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent was used. The positive electrode 34 was applied onto each of the current collector 32A and the current collector 32B to obtain the first positive electrode laminate 30A and the second positive electrode laminate 30B. Ten first positive electrode laminates 30A and ten second positive electrode laminates 30B were prepared, respectively.

Next, the sheet SH was installed in an automatic laminating device. Then, the sheet SH was automatically folded alternately at an acute angle a plurality of times to form a negative electrode laminate, and one first positive electrode laminate 30A and one second positive electrode laminate 30B were alternately inserted between the separators 20 facing each other. Then, each of the current collectors 32A (10 collectors) of the first positive electrode laminate 30A and the current collectors 32B (10 collectors) of the second positive electrode laminate 30B was joined to the electrode tab 40 for a positive electrode by ultrasonic welding. In this case, the first notch NA of the current collector 32A and the second notch NB of the current collector 32B were joined to the electrode tab 40 at positions different from each other in a case of being viewed from the lamination direction. In addition, the negative electrode terminal 12 was joined to the electrode tab for a negative electrode by ultrasonic welding. Such a structural body was inserted into a laminate exterior body and sealed together with an electrolyte solution to obtain a lithium secondary battery. As the electrolyte solution, 4 M LiN(SO₂F)₂ dimethoxyethane was used.

### (Example 2)

In Example 2, a lithium secondary battery was obtained in the same manner as in Example 1, except that seven current collectors of each of three kinds of current collectors 32C to 32E having such notches NC to NE and NB as illustrated in Figure 6A to Figure 6 were used as the current collector 32 (the total number of positive electrode laminates 30 was 21).

### (Example 3)

In Example 3, a lithium secondary battery was obtained in the same manner as in Example 1, except that the current collector 32A and the current collector 32B, which have a size of 10 cm × 20 cm, were used.

### (Comparative Example 1)

In Comparative Example 1, a lithium secondary battery was obtained in the same manner as in Example 1, except that twenty current collectors 32 having the same shape were used and the notch of each current collector was joined to the electrode tab at the same position in a case of being viewed from the lamination direction.

### (Comparative Example 2)

In Comparative Example 2, a lithium secondary battery was obtained in the same manner as in Comparative Example 1, except that a current collector without including a resin layer, which has a thickness of 12 µm and consists of only an Al foil, was used as the current collector.

### (Evaluation of battery characteristics)

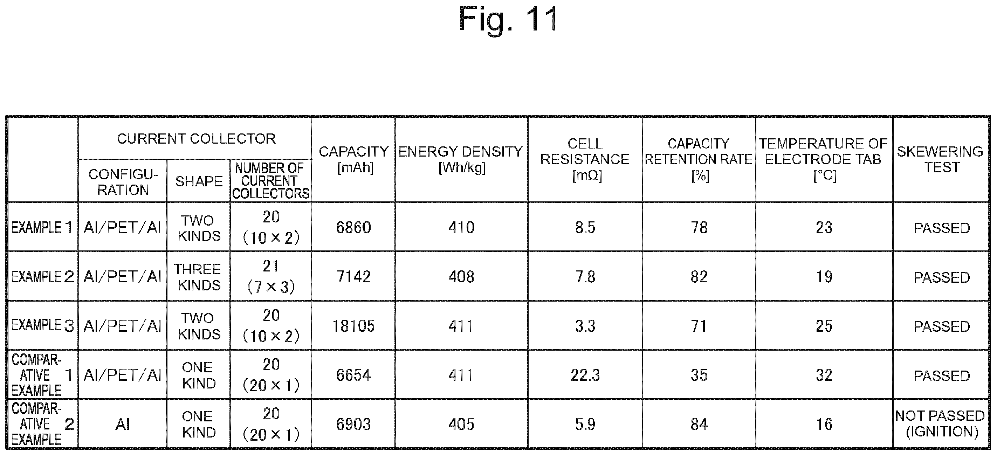

Figure 11 is a table illustrating the configurations of the current collectors and the results of various evaluations according to Examples and Comparative Examples. In Figure 11, the "capacity" is an initial capacity [mAh] in a case where each battery is charged to 4.3 V at 0.2 C and then discharged to 3.0 V at 0.2 C (hereinafter, referred to as "initial discharging"). The "cell resistance" is a 1 kHz impedance [mΩ] after the initial charging and discharging. In Example 1, Example 2, Comparative Example 1, and Comparative Example 2, the "capacity retention rate" is a ratio (Q1/Q2 × 100) [%] of a discharge capacity Q1 at the time of charging at 0.05 C and discharging at 7 C to a discharge capacity Q2 at the time of charging at 0.05 C and discharging at 0.05 C. In Example 3, the "capacity retention rate" is a ratio (Q3/Q2 × 100) [%] of a discharge capacity Q3 at the time of charging at 0.05 C and discharging at 5 C to a discharge capacity Q2 at the time of charging at 0.05 C and discharging at 0.05 C. The temperature of the electrode tab is the temperature [°C] of the electrode tab measured after the initial discharging. The "skewering test" is a test for checking the presence or absence of ignition or explosion of a battery in a case where a nail is pierced through each battery to cause an internal short circuit in a pseudo manner, and the "passed" means that ignition or explosion has not occurred, and "not passed" means that ignition or explosion has occurred.

As illustrated in Figure 11, in Examples 1 to 3, good results were obtained in all of the cell resistance, the capacity retention rate, the temperature of the electrode tab, and the skewering test. On the other hand, in Comparative Example 1, the cell resistance was significantly high as compared with Examples 1 to 3. This is presumed to be because, in Comparative Example 1, the notches of the respective current collectors are joined to the electrode tab at the same position in a case of being viewed from the lamination direction, and thus the joining between the Al foils of the respective notches is insufficient. In Comparative Example 1, as a result, the capacity retention rate was also significantly reduced, and the temperature of the electrode tab was also increased. In Comparative Example 2, the skewering test was not passed and ignition occurred. This is presumed to be because the current collector consists of only the Al foil and thus does not have an insulating layer.

The embodiments of the present disclosure further include the following aspects.

### (Addendum 1)

A lithium secondary battery including:
an electrode tab;
a plurality of positive electrode laminates that are disposed to be spaced from each other in a lamination direction through an interposed negative electrode and separator, where each of the positive electrode laminates has a current collector that is constituted of an insulating layer sandwiched by conductive layers and that is electrically connected to the electrode tab, and a positive electrode provided on both surfaces of the current collector,
in which at least one of the current collectors of the plurality of positive electrode laminates and at least one other current collector are joined to the electrode tab at positions different from each other in a case of being viewed from the lamination direction.

### (Addendum 2)

The lithium secondary battery according to Addendum 1, in which in each of the plurality of positive electrode laminates, the current collector has a notch that extends in a direction parallel to a main surface of the current collector and that is joined to the electrode tab.

### (Addendum 3)

The lithium secondary battery according to Addendum 2, in which the notch is positioned above or below the electrode tab in the lamination direction.

### (Addendum 4)

The lithium secondary battery according to Addendum 2 or Addendum 3, in which an area of the notch is smaller than an area of the electrode tab.

### (Addendum 5)

The lithium secondary battery according to any one of Addendum 2 to Addendum 4, in which the notch of the at least one of the current collectors and the notch of the at least one other current collector are provided at positions different from each other in a case of being viewed from the lamination direction.

### (Addendum 6)

The lithium secondary battery according to any one of Addendum 2 to Addendum 5, in which in each of the plurality of positive electrode laminates, the notch of the current collector has an opening portion, and the opening portion of at least one of the current collectors and the opening portion of at least one other current collector are provided at positions different from each other in a case of being viewed from the lamination direction.

### (Addendum 7)

The lithium secondary battery according to any one of Addendum 1 to Addendum 6, in which a shape of at least one of the current collectors is different from a shape of at least one other current collector.

### (Addendum 8)

The lithium secondary battery according to any one of Addendum 1 to Addendum 7, in which 20 to 30 positive electrode laminates are provided.

### (Addendum 9)

The lithium secondary battery according to any one of Addendum 1 to Addendum 8, in which the current collectors of 4 to 15 positive electrode laminates are joined to the electrode tab at the same position in a case of being viewed from the lamination direction.

### (Addendum 10)

The lithium secondary battery according to any one of Addendum 1 to Addendum 9, in which the current collectors of the 4 to 15 positive electrode laminates and at least one other current collector are joined to the electrode tab at positions different from each other in a case of being viewed from the lamination direction.

### (Addendum 11)

The lithium secondary battery according to any one of Addendum 1 to Addendum 10, in which the lithium secondary battery has an energy density of 300 Wh/kg or more.

### (Addendum 12)

The lithium secondary battery according to any one of Addendum 1 to Addendum 11, in which the lithium secondary battery has a rated capacity of 1.5 A or more.

### (Addendum 13)

The lithium secondary battery according to any one of Addendum 1 to Addendum 12, in which the lithium secondary battery has a rated capacity of 5 A or more.

### (Addendum 14)

The lithium secondary battery according to any one of Addendum 1 to Addendum 13, in which a negative electrode laminate is constituted by alternately folding a sheet, which includes the negative electrode and the separator disposed on both surfaces of the negative electrode, at an acute angle a plurality of times, and
each of the positive electrode laminates is disposed between the separators, which face each other in the negative electrode laminate.

### (Addendum 15)

The lithium secondary battery according to any one of Addendum 1 to Addendum 14, in which a negative electrode laminate is constituted by winding a sheet, which includes the negative electrode and the separator disposed on both surfaces of the negative electrode, so that the sheet is folded back a plurality of times, and
each of the positive electrode laminates is disposed between the separators, which face each other in the negative electrode laminate.

### (Addendum 16)

The lithium secondary battery according to any one of Addendum 1 to Addendum 15, in which a buffer functional layer is provided between the negative electrode and the separator disposed on both surfaces of the negative electrode.

### (Addendum 17)

The lithium secondary battery according to any one of Addendum 1 to Addendum 16, in which the negative electrode is substantially free of a negative-electrode active material.

### (Addendum 18)

The lithium secondary battery according to any one of Addendum 1 to Addendum 17, in which the negative electrode is formed from at least one kind selected from the group consisting of a metal that does not react with Cu, Ni, Ti, Fe, and Li, an alloy of these metals, and stainless steel.

### (Addendum 19)

A manufacturing method for a lithium secondary battery, including:
(a) a step of disposing a plurality of positive electrode laminates that are disposed to be spaced from each other in a lamination direction through an interposed negative electrode and separator, where each of the positive electrode laminates has a current collector that is constituted of an insulating layer sandwiched by conductive layers, and a positive electrode provided on both surfaces of the current collector; and
(b) a step of joining the current collector of each of the plurality of positive electrode laminates to an electrode tab,
in which in the step of (b), at least one of the current collectors of the plurality of positive electrode laminates and at least one other current collector are joined to the electrode tab at positions different from each other in a case of being viewed from the lamination direction.

### (Addendum 20)

The manufacturing method for a lithium secondary battery according to Addendum 19, in which in the step of (b), the joining of the current collector to the electrode tab is carried out using any one of ultrasonic welding, laser welding, or resistance welding.

Each of the above embodiments is described for the purpose of description, and is not intended to limit the scope of the present disclosure. Each of the above embodiments may be modified in various ways without departing from the scope and purpose of the present disclosure. For example, some constitutional elements in one embodiment can be added to other embodiments. In addition, some constitutional elements in one embodiment can be replaced with corresponding constitutional elements in other embodiments.

### Reference Signs List

1: lithium secondary battery, 10: negative electrode, 20: separator, 30: positive electrode laminate, 32: current collector, 320: insulating layer, 322: conductive layer, 34: positive electrode, 40: electrode tab, 50: buffer functional layer

## Claims

1. A lithium secondary battery comprising:
an electrode tab; and
a plurality of positive electrode laminates that are disposed to be spaced from each other in a lamination direction through an interposed negative electrode and separator, where each of the positive electrode laminates has a current collector that is constituted of an insulating layer sandwiched by conductive layers and that is electrically connected to the electrode tab, and a positive electrode provided on both surfaces of the current collector,
wherein at least one of the current collectors of the plurality of positive electrode laminates and at least one other current collector are joined to the electrode tab at positions different from each other in a case of being viewed from the lamination direction.

2. The lithium secondary battery according to Claim 1,
wherein in each of the plurality of positive electrode laminates, the current collector has a notch that extends in a direction parallel to a main surface of the current collector and that is joined to the electrode tab.

3. The lithium secondary battery according to Claim 2,
wherein the notch is positioned above or below the electrode tab in the lamination direction.

4. The lithium secondary battery according to Claim 3,
wherein an area of the notch is smaller than an area of the electrode tab.

5. The lithium secondary battery according to any one of Claims 2 to 4,
wherein the notch of the at least one of the current collectors and the notch of the at least one other current collector are provided at positions different from each other in a case of being viewed from the lamination direction.

6. The lithium secondary battery according to any one of Claims 2 to 4,
wherein in each of the plurality of positive electrode laminates, the notch of the current collector has an opening portion, and the opening portion of at least one of the current collectors and the opening portion of at least one other current collector are provided at positions different from each other in a case of being viewed from the lamination direction.

7. The lithium secondary battery according to any one of Claims 1 to 4,
wherein a shape of at least one of the current collectors is different from a shape of at least one other current collector.

8. The lithium secondary battery according to any one of Claims 1 to 4,
wherein 20 to 30 positive electrode laminates are provided.

9. The lithium secondary battery according to Claim 8,
wherein the current collectors of 4 to 15 positive electrode laminates are joined to the electrode tab at the same position in a case of being viewed from the lamination direction.

10. The lithium secondary battery according to Claim 9,
wherein the current collectors of the 4 to 15 positive electrode laminates and at least one other current collector are joined to the electrode tab at positions different from each other in a case of being viewed from the lamination direction.

11. The lithium secondary battery according to any one of Claims 1 to 4,
wherein the lithium secondary battery has an energy density of 300 Wh/kg or more.

12. The lithium secondary battery according to any one of Claims 1 to 4,
wherein the lithium secondary battery has a rated capacity of 1.5 A or more.

13. The lithium secondary battery according to any one of Claims 1 to 4,
wherein the lithium secondary battery has a rated capacity of 5 A or more.

14. The lithium secondary battery according to Claim 1,
wherein a negative electrode laminate is constituted by alternately folding a sheet, which includes the negative electrode and the separator disposed on both surfaces of the negative electrode, at an acute angle a plurality of times, and
each of the positive electrode laminates is disposed between the separators, which face each other in the negative electrode laminate.

15. The lithium secondary battery according to Claim 1,
wherein a negative electrode laminate is constituted by winding a sheet, which includes the negative electrode and the separator disposed on both surfaces of the negative electrode, so that the sheet is folded back a plurality of times, and
each of the positive electrode laminates is disposed between the separators, which face each other in the negative electrode laminate.

16. The lithium secondary battery according to any one of Claims 1 to 4,
wherein a buffer functional layer is provided between the negative electrode and the separator disposed on both surfaces of the negative electrode.

17. The lithium secondary battery according to any one of Claims 1 to 4,
wherein the negative electrode is substantially free of a negative-electrode active material.

18. The lithium secondary battery according to any one of Claims 1 to 4,
wherein the negative electrode is formed from at least one kind selected from the group consisting of a metal that does not react with Cu, Ni, Ti, Fe, and Li, an alloy of these metals, and stainless steel.

19. A manufacturing method for a lithium secondary battery, comprising:
(a) a step of disposing a plurality of positive electrode laminates that are disposed to be spaced from each other in a lamination direction through an interposed negative electrode and separator, where each of the positive electrode laminates has a current collector that is constituted of an insulating layer sandwiched by conductive layers, and a positive electrode provided on both surfaces of the current collector; and
(b) a step of joining the current collector of each of the plurality of positive electrode laminates to an electrode tab,
wherein in the step of (b), at least one of the current collectors of the plurality of positive electrode laminates and at least one other current collector are joined to the electrode tab at positions different from each other in a case of being viewed from the lamination direction.

20. The manufacturing method for a lithium secondary battery according to Claim 19,
wherein in the step of (b), the joining of the current collector to the electrode tab is carried out using any one of ultrasonic welding, laser welding, or resistance welding.
